# EUROPÄISCHE PATENTSCHRIFT

(11) **EP 3 026 997 B1**
(45) Veröffentlichungstag und Bekanntmachung des Hinweises auf die Patenterteilung: **15.05.2019**
(21) Anmeldenummer: 14766102.9
(22) Anmeldetag: 15.07.2014
(51) Int. Cl.: A01B 63/22, A01B 63/32

(54) **BODENBEARBEITUNGSGERÄT MIT EINRICHTUNG ZUR RÜCKVERFESTIGUNG**
SOIL CULTIVATION IMPLEMENT HAVING A DEVICE FOR RECONSOLIDATION
MATÉRIEL DE TRAVAIL DU SOL MUNI D'UN SYSTÈME DE RAPPUYAGE

(30) Priorität: 31.07.2013 DE 102013108229
(43) Veröffentlichungstag der Anmeldung: 08.06.2016
(73) Patentinhaber: Lemken GmbH & Co. KG, 46519 Alpen (DE)
(72) Erfinder: ACHTEN, Georg, 47918 Tönisvorst (DE); BODEWIG, Johannes, 40667 Meerbusch (DE); DIEPERS, Clemens, 47647 Aldekerk (DE); VAN HAAREN, Josef, 47546 Kalkar (DE); HAPPE, Christoph, 46519 Alpen (DE); KARSTEN, Sebastian, 46509 Xanten (DE); MAAS, Ludger, 47665 Sonsbeck (DE); PAULESSEN, Georg, 47877 Willich (DE)
(86) Internationale Anmeldenummer: PCT/DE2014/100256
(87) Internationale Veröffentlichungsnummer: WO 2015/014345

(56) Entgegenhaltungen:
- WO-A1-01/95698
- WO-A1-2013/030183
- FR-A1- 2 946 831

## Beschreibung

Die Erfindung betrifft ein gezogenes Bodenbearbeitungsgerät gemäß dem Oberbegriff des Patentanspruches 1.

Gezogene Bodenbearbeitungsgeräte weisen meist eine große Arbeitsbreite und somit eine Vielzahl von neben- und hintereinander angeordneten Bodenlockerungswerkzeugen auf, welche in einem Bereich zusammen gefasst sind, und dazu dienen, die Ackerbodenoberfläche aufzuschneiden oder aufzureißen und den Boden zu lockern und mit Ernteresten zu vermischen. Weiterhin ist diesem Werkzeugbereich meist eine Rückverfestigungseinrichtung nachgelagert, welche den gelockerten und zerkleinerten Boden teilweise wieder verdichtet, um für die nachfolgende Aussaat eine kapillare Wasserversorgung für die Saatgutkeimlinge zu ermöglichen. Da diese breiten Bodenberarbeitungsgeräte eine sehr hohe Zugkraft benötigen, gelangt der ziehende Traktor an seine Schlupfgrenze, das heißt, seine Antriebsräder drehen durch und können keine weitere Zugkraft übertragen. Einen Lösungsansatz für dieses Problem verfolgen die deutsche Patentschrift DE10 2011 050 195 B4 und die deutsche Gebrauchsmusterschrift DE 20 2011 107 598 U1, indem sie mit einer beweglichen Zugeinrichtung und daran angreifenden Hydraulikzylindern einen Teil des Gerätegewichtes geregelt und traktionserhöhend auf die Anhängekupplung des Traktors übertragen. Allerdings ändert sich bei dieser Ausführung insbesondere in unebenem Gelände ständig die Zuglinie, welche zwischen den Angriffspunkten der Bodenlockerungswerkzeugen und der Anhängevorrichtung des Traktors verläuft. Hier ist eine stabile Tiefenführung der Bodenlockerungswerkzeuge trotz der den Geräten vorgelagerten Tiefenführungsräder nur schwer zu realisieren. Aufgrund der sich ändernden Zuglinie muss die Auflagekraft auf die Anhängekupplung des Traktors aufgrund der vorherrschenden Kräfteverhältnisse ständig nachgeregelt werden. Einen anderen Weg verfolgt die deutsche Offenlegungsschrift DE 10 2008 032 592 A1, indem die Zugeinrichtung mit einer Dreipunkthydraulik des Traktors verbunden ist und durch einen weiteren Energiespeicher sowohl Gerätegewicht als auch ein Teil der Vorderachslast auf die Hinterachse des Traktors traktionsverbessernd und effizient überträgt. Durch die starre Anordnung der Zugeinrichtung wird ein konstanter Verlauf der Zuglinie von den Angriffspunkten der Bodenlockerungswerkzeugen zum Anhängepunkt des Traktors erreicht. Allerdings kann in unebenem Gelände die Arbeitstiefe der Bodenlockerungswerkzeuge vom Sollwert abweichen. Die Folge ist ein nur teilweise bearbeiteter Boden oder eine das Traktionsvermögen des Traktors übersteigende erforderliche Zugkraft des Bodenbearbeitungsgerätes. In einer weiteren Offenlegung DE 10 2007 011 297 A1 wird eine gezogene Säscharanordnung beschrieben, bei der ein oder zwei Doppelscheibenschare durch ein Tragrad abgestützt werden, an dessen Tragradarm weitere, in ihrem Anpressdruck einstellbare Druckrollen beweglich befestigt sind, welche die Saatrillen verschließen.

Ausgehend vom Stand der Technik ist die Aufgabe der Erfindung, die obigen Nachteile zu beseitigen und eine stabil geregelte Tiefenführung für ein gezogenes Bodenbearbeitungsgerät bereitzustellen.

Die Aufgabe wird durch die Merkmale des kennzeichnenden Teiles des Anspruches 1 gelöst.

Indem die Arbeitstiefe der Bodenlockerungswerkzeuge über Tiefenführungseinrichtungen vorgegeben wird, deren Auflagedruck auf den Boden durch eine Steuer- und Regeleinrichtung begrenzt oder geregelt wird, kann ein großer Teil des Gerätegewichtes auf der Rückverfestigungseinrichtung lasten und diese in ihrer Wirkung unterstützen sowie ein weiterer Teil des Gerätegewichtes über die Zugeinrichtung die Traktorhinterachse belasten. Steigt oder sinkt der Auflagedruck der Tiefenführungseinrichtung, wird die Höheneinstellung der Rückversfestigungseinrichtung zu den Bodenlockerungswerkzeugen über Stellmittel durch die Steuer- und Regeleinrichtung nachjustiert. Bei gegebenem Gerätegewicht ergibt sich in vorteilhafter Weise eine konstante Aufteilung des Gerätegewichtes zwischen Zugeinrichtung, Tiefenführungseinrichtung und Rückverfestigungseinrichtung.

In einer speziellen Ausführungsform ist der minimale Abstand der Tiefenführungseinrichtung zu einem der Bodenlockerungswerkzeuge geringer ausgebildet als der minimale Abstand des Bereiches der Bodenlockerungswerkzeuge zur Rückverfestigungseinrichtung. Hierdurch wird mit geringen Stellwegen der Stellmittel ein weiter Höhenverstellbereich der Rückverfestigungseinheit und zugleich eine hohe Regelgenauigkeit erreicht.

In einer weiteren Erfindungsform ist der Auflagedruck der Tiefenführungseinrichtung auf den Boden als Regelgröße in Stufen oder stufenlos vorwählbar oder einstellbar. Durch die Vorwahl des zu regelnden Auflagedruckes kann in einfacher Weise auf verschiedene Bodenqualitäten reagiert und die Regelgüte des Auflagedruckes weiter verbessert werden. Die Vorwahl des zu regelnden Auflagedruckes kann sowohl direkt an der Steuer- und Regeleinrichtung als auch über eine weitere Eingabevorrichtung auf dem Traktor, welcher mit der Steuer- und Regeleinrichtung kommuniziert, vorgenommen werden

In einer bevorzugten Erfindungsform wird der Auflagedruck der Tiefenführungseinrichtung auf den Boden mit Messmitteln an der Tiefenführungseinrichtung ermittelt. Die Messmittel sind mit der Steuer- und Regeleinrichtung verbunden. Durch unmittelbare Zuordnung einer Messeinrichtung wie Kraftmessbolzen oder Dehnungsmesstreifen zu der Tiefenführungseinrichtung wird die tatsächliche Auflagekraft oder der tatsächliche Auflagedruck unmittelbar oder über bekannte Hebelverhältnisse auf einfache Art ermittelt. Es ist auch möglich, die Tiefenführungseinrichtung teilweise gefedert aufzuhängen. Die Auflagekraft oder der Auflagedruck kann durch die Ermittlung des Federweges der Aufhängung oder der Feder mit beispielsweise einem Wegaufnehmer bei bekannter Federrate berechnet werden. Auch kann die Tiefenführungseinrichtung durch Stellmittel in ihrem vertikalen Abstand zum Bodenlockerungswerkzeugen beziehungsweise zum Rahmen verstellt werden. Die erforderliche Stellkraft der Stellmittel oder beispielsweise der hydraulische Stelldruck wird dann sensorisch ermittelt und kann zur Berechnung der Auflagekraft oder des Auflagedruckes durch die Steuer- und Regeleinrichtung verwendet werden.

In einer günstigen Ausführung der Erfindung werden die Stellkräfte der Stellmittel zur Höheneinstellung der Rückverfestigungseinrichtung durch die Steuer- und Regeleinrichtung erfasst und zur Regelung des Auflagedruckes der Tiefenführungseinrichtung herangezogen. Durch Ermittlung der Stellkräfte der Stellmittel zur Höheneinstellung der Rückverfestigungseinrichtung kann bei bekannten oder gemessenen Geometriebedingungen und Rahmenabmessungen der Auflagedruck der Tiefenführungseinrichtungen durch die Steuer- und Regeleinrichtung berechnet werden und als Regelgröße vorgegeben werden.

In einer anderen Ausführung des Bodenbearbeitungsgerätes sind weitere Stellmittel zum Einstellen des Rahmens in eine Arbeitsstellung vorgesehen, deren ermittelte Stellkräfte auf den Auflagedruck der Tiefenführungseinrichtung schließen lassen und zu dessen Regelung durch die Steuer- und Regeleinrichtung herangezogen werden.

Es ist auch denkbar die Steuer- und Regeleinrichtung als Dreipunktregler auszubilden. Durch diese Ausführungsform können auf einfache Weise digitale Steuerbefehle von der Steuer- und Regeleinrichtung an die Stellglieder und Stellelemente gesandt werden. Insbesondere ist hier an hydraulische Schwarz-Weiß-Steuerventile und hydraulische oder pneumatische Einstellzylinder als Stellmittel gedacht. Ebenfalls ist zum Beispiel der Einbau elektrischer Spindelstellantriebe möglich.

In einer bevorzugten Erfindungsform ist die Steuer- und Regeleinrichtung auf Steuer- oder Stellelemente des Traktors einwirkend ausgebildet. Durch Ansteuerung beispielsweise der hydraulischen Steuerventile eines Traktors, welche mit den Stellmitteln des Bodenbearbeitungsgerätes verbunden sind, können beispielsweise weitere Steuerventile kostengünstig auf dem Bodenbearbeitungsgerät eingespart werden. Eine Kommunikation der Steuer- und Regeleinrichtung mit den Steuer- und Stellelementen des Traktors findet auf elektrisch analogem oder digitalem Wege, mit einem Datenbussystem oder drahtlos wie beispielsweise per Funk statt.

In einer anderen Ausführung der Erfindung sind die Tiefenführungseinrichtungen seitlich zum Bereich der Bodenlockerungswerkzeuge angeordnet. Durch die Anordnung seitlich zum Feld der Bodenlockerungswerkzeuge wird eine hohe Genauigkeit der Tiefenführung erreicht.

In einer bevorzugten Form der Erfindung ist der Bereich der Bodenlockerungswerkzeuge zumindest in den vorderen Reihen in einer trapezförmigen Aufteilung der Bodenlockerungswerkzeuge ausgebildet. Durch die die Bodenlockerungswerkzeuge umgebende, gedachte trapezförmige Berandung entsteht ein Freiraum, worin die Tiefenführungseinrichtung seitlich zur ersten Reihe der Werkzeuge und vor dem äußersten Werkzeug der nachfolgenden Werkzeugreihen zum Rahmen angeordnet werden kann. Hierdurch wird die Genauigkeit der Tiefenführung nochmals wesentlich erhöht. Zudem kann der Boden bis an die Ackergrenze ganzflächig bearbeitet werden, ohne dass die Tiefenführungseinrichtung diesen Bereich überragt und z.B. mit Hindernissen kollidiert. Durch die trapezförmige Aufteilung der Bodenlockerungswerkzeuge wird das Gerät zudem seitlich besser in der Fahrspur geführt und stabilisiert.

In einer erweiterten Erfindungsform ist der Zugeinrichtung zumindest ein weiteres Stellmittel zugeordnet, um einen Teil des Gewichtes des Bodenbearbeitungsgerätes auf den Traktor zu übertragen. Hierdurch kann flexibel die Gewichtsverteilung zwischen Traktor und Rückverfestigungseinheit variiert werden. Da der Auflagedruck der Tiefenführungseinrichtung nach wie vor geregelt wird, wird die nun durch das weitere Stellmittel zwischen Traktor und Bodenbearbeitungsgerät veränderte Gewichtsverteilung ebenfalls konstant gehalten. Insbesondere die Gewichtsübertragung auf den Traktor mittels eines Traktionsverstärkers als Stellmittel, welcher mit der Dreipunkthydraulik des Traktors zusammenwirkt, beeinflusst die Regelgüte des Auflagedruckes der Tiefenführungseinrichtung nicht negativ.

Ein weiterer Vorschlag sieht vor, dass dem Bodenbearbeitungsgerät ein vorzugsweise höhenverstellbares Transportfahrwerk zugeordnet ist. Durch diese Ausführungsform ist ein einfacher Straßentransport des Bodenbearbeitungsgerätes ermöglicht. Bei Anordnung des Fahrwerkes zwischen dem Bereich der Bodenlockerungswerkzeuge und der Rückverfestigungseinrichtung wird eine besonders gute Wendigkeit des Traktor-Gerätegespannes erreicht. Wird aus ackerbaulichen Erwägungen auf eine ganzflächige Rückverfestigung verzichtet, kann das Transportfahrwerk die Aufgaben der Rückverfestigungseinrichtung ganz oder teilflächig übernehmen beziehungsweise als Stellglied zur Regelung des Auflagedruckes der Tiefenführungseinrichtung dienen.

In einer erweiterten Form der Erfindung ist das Transportfahrwerk über Stellmittel zusammen in einer Folgeschaltung mit den Stellmitteln zur Höhenverstellung der Rückverfestigungseinrichtung höhenverstellbar ausgebildet. Somit kann über ein Betätigungsmittel der Auflagedruck der Tiefenführungseinrichtung und der Aushub des Fahrwerkes manuell übersteuert werden.

Die Erfindung bezieht sich insbesondere auf ein Bodenbearbeitungsgerät, das als Zinkengrubber oder Kurzscheibenegge ausgebildet ist. Insbesondere diese Geräte weisen mit zunehmender Arbeitstiefe einen hohen Zugkraftbedarf auf und bedürfen der Vorteile einer geregelten Tiefenführung.

Die Erfindung zeichnet sich insbesondere dadurch aus, dass bei annähernd gleichbleibendem Druck auf die Rückverfestigungseinheit eine konstante Schlepper-Gerät-Zuglinie gebildet wird, welche ein gleichbleibendes Traktionsverhalten des ziehenden Traktors ermöglicht, indem der Auflagedruck der Tiefenführungseinrichtung auf den Boden begrenzt und geregelt wird. Auch der problemlose Einsatz eines Traktionsverstärkers zum Übertragen von Gerätegewicht auf den ziehenden Schlepper wird ermöglicht, da aufgrund der räumlich weit vom Traktionsverstärker entfernten Stellelemente kein negativer Einfluss auf die Wirkung des Traktionsverstärkers zu erwarten ist. Die Tiefenführungseinrichtung erfüllt ihre Aufgabe bei ständigem Bodenkontakt mit geregeltem Auflagedruck insbesondere auch in unebenem Gelände in optimaler Weise und gewährleistet ein konstantes Arbeitsergebnis des Bodenbearbeitungsgerätes, ohne dabei überlastet zu werden. Durch die gleichbleibende Arbeitstiefe und Reduzierung des Traktorschlupfes wird der Antriebsenergiebedarf und somit Kraftstoffverbrauch und CO²-Ausstoß auf ein Minimum reduziert.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Fig.1: Seitenansicht eines Gespannes aus Traktor und gezogenem Bodenbearbeitungsgerät.
- Fig.2: Perspektivische Darstellung eines gezogenen Bodenbearbeitungsgerätes.

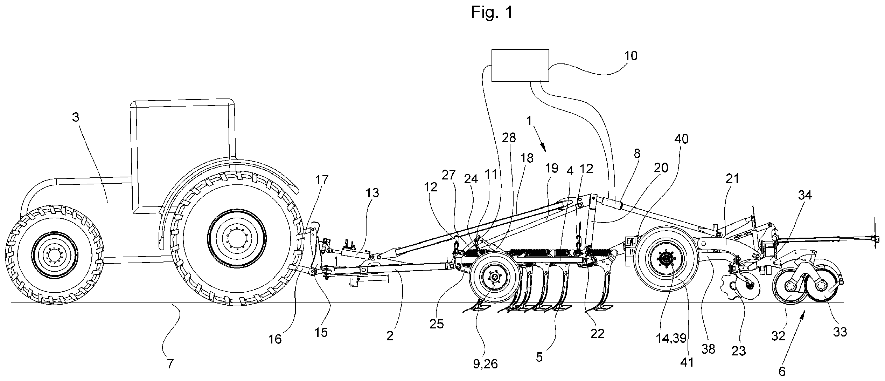

In Figur 1 ist ein gezogenes Bodenbearbeitungsgerät 1 in Seitenansicht dargestellt. Dieses ist über die Zugeinrichtung 2 und einen Anbaurahmen 15 mit Ober- und Unterlenkern 16,17 der Dreipunkthydraulik des ziehenden Traktors 3 verbunden. Die Dreipunkthydraulik kann das Bodenbearbeitungsgerät 1 im vorderen Bereich ausheben. Zudem stellt der Traktor 3 über nicht weiter dargestellte Leitungen die hydraulische oder elektrische Energieversorgung für das Bodenbearbeitungsgerät 1 und die Steuer- und Regeleinrichtung 10 bereit. Die Steuer- und Regeleinrichtung 10 ist hier als Mobilcontroller ausgelegt, welcher die Werte der Messmittel 11 und Signalgeber auswertet und verrechnet und die erforderlichen Stellsignale an die Stellglieder oder Stellmittel 8 weiter gibt. Die Stellsignale können direkt oder über nicht weiter dargestellte Schalteinheiten wie elektrische Leistungsschalter oder hydraulische oder pneumatische Ventile an die Stellmittel 8 übermittelt werden. Zugleich können auch weitere Stellmittel 12,13, 28, 36, 40 parallel betätigt werden. Die Steuer- und Regeleinrichtung 10 kann mit einer nicht dargestellten Anzeige- oder Bedieneinheit auf dem Gerät oder dem Traktor 3 verbunden sein. An den Anbaurahmen 15 ist die Zugeinrichtung 2 gelenkig in mehreren Freiheitsgraden befestigt, um Nick-, Wank- und Lenkbewegungen zwischen Traktor 3 und Bodenbearbeitungsgerät 1 auszugleichen. Oberhalb der Zugeinrichtung 2 ist ein Stellmittel 13 als Hydraulikzylinder zwischen der Zugeinrichtung 2 und dem Anbaurahmen 15 gelenkig angeordnet, um eine Gewichtsverlagerung von Gerät oder Traktorvorderachse auf die Traktorhinterachse in Funktion eines Traktionsverstärkers zu ermöglichen. Die Zugeinrichtung 2 ist einerseits am Rahmen 4 befestigt und stützt sich über eine Strebe 18 gegen einen ebenfalls am Rahmen 4 befestigten Turm 20 ab, welcher wiederum über weitere Streben 19 zum Rahmen 4 abgestrebt ist. Am Rahmen 4 sind längs und quer zueinander beabstandet Bodenlockerungswerkzeuge 5, 5', 5" in Form von überlastungsgesicherten Flügelscharzinken in Querreihen befestigt. Die gedachte Umrandung dieses Anordnungsmusters der Bodenlockerungswerkzeuge 5 bildet von oben gesehen annähernd eine sich nach hinten verbreiternde Trapezform. Seitlich zum Rahmen 4 sind Tiefenführungseinrichtungen 9 höhenverstellbar befestigt. Die Tiefenführungseinrichtung 9 besteht aus einem Stützrad 26, welches drehbar an einem Schwenkarm 25 gelagert ist. Dieser ist vertikal schwenkbar am Rahmen 4 gelagert und stützt sich wiederum über ein Spannschloss 24 gegen eine Lasche 27 ab, welche sich über ein längenverstellbares Stellmittel 28 in Form eines Hydraulikzylinders gegen den Rahmen 4 abstützt. Ein Messmittel 11 in Form eines Kraftmessbolzens, welcher die Lasche 27 mit dem Spannschloss 24 verbindet, ermittelt den Auflagedruck oder die Auflagekraft der Tiefenführungseinrichtung 9 auf den Boden 7. Auch kann ein Drucksensor in der Hydraulikleitung, welche das Stellmittel 28 versorgt, zur Auflagedruckermittlung der Tiefenführungseinrichtung 9 verwendet werden. Anstelle des Stützrades 26 sind auch Schleifkufen oder andere Tiefenführungsmittel denkbar.
Hinter dem Rahmen 4 ist über Gelenke 22 ein weiterer Rahmen 21 vertikal schwenkbar angebracht, welcher die Rückverfestigungseinheit 6 trägt. Zwischen dem Rahmen 21 und dem Turm 20 ist ein weiteres Stellmittel 8 in Form eines verlängerten Hydraulikzylinders im Abstand zu den Gelenken 22 angebracht. Durch Längenverstellung dieses Stellmittels 8 durch die Steuer- und Regeleinrichtung 10 schwenkt der Rahmen 21 mit der Rückverfestigungseinheit 6 um die Achse der Gelenke 22 und ermöglicht eine Höhenverstellung der Rückverfestigungseinheit 6 relativ zu den Bodenlockerungswerkzeugen 5, 5', 5". Steigt der gemessene Auflagedruck der Tiefenführungseinrichtung 9 auf den Boden 7 beispielsweise während der Durchfahrt einer Bodenunebenheit, gibt die Steuer- und Regeleinrichtung 10 dem Stellmittel 8 ein Signal, weiter auszufahren, bis der angestrebte Auflagedruck der Tiefenführungseinrichtung 9 erreicht wird. Sinkt der gemessene Auflagedruck, verhält sich die Steuer- und Regeleinrichtung 10 umgekehrt und sendet dem Stellmittel 8 ein Signal, wieder einzufahren, bis der angestrebte Auflagedruck der Tiefenführungseinrichtung 9 auf den Boden 7 erreicht wird. Somit wird ein ständiger Kontakt und Auflagedruck der Tiefenführungseinrichtung 9 zum Boden 7 gewährleistet und somit die gewünschte Arbeitstiefe der Bodenlockerungswerkzeuge 5, 5', 5" auch bei Arbeitsfahrt in unebenem und kuppiertem Gelände beibehalten. Dabei bleibt die Last auf die Rückverfestigungseinheit 6 annähernd konstant und die Zuglinie zwischen Anbaurahmen 15 und Bodenlockerungswerkzeugen 5, 5', 5" in idealer Richtung erhalten. Der Rückverfestigungseinheit 6 ist ein Satz Einebnungswerkzeuge 23 in Form von angewinkelten, drehbaren Hohlscheiben vorgelagert, welche die von der letzten Reihe von Bodenlockerungswerkzeugen 5" aufgeworfenen Dämme aus losem Bodenmaterial wieder einebnen. Zudem ist gelenkig am Rahmen 21 ein vertikal schwenkbares Transportfahrwerk 14 angebracht, welches in üblicher Weise aus einem Fahrwerksrahmen 38, einer Laufachse 39 und Laufrädern 41 besteht und mit Stellmitteln 40 in Form von hydraulischen Zylindern das Bodenbearbeitungsgerät 1 für Transport und Wendebetrieb aufsattelt. Die hydraulischen Zylinder werden mit Drucköl vom Traktor versorgt. Während der Bodenbearbeitung wird das Transportfahrwerk 14 über die Oberfläche des Bodens 7, wie dargestellt, ausgehoben.

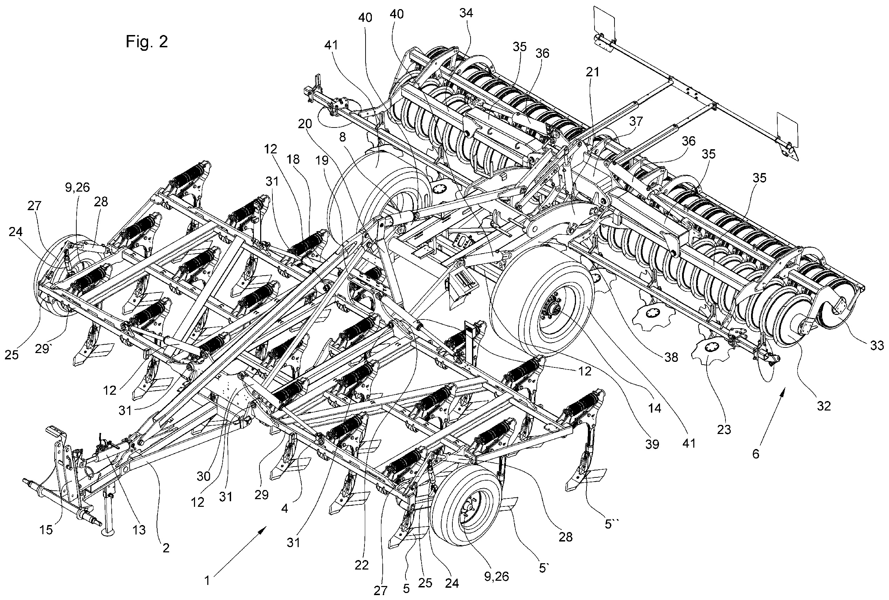

Figur 2 zeigt das gleiche Gerät in perspektivischer Darstellung. Der Rahmen 4 ist aus einem Mittelteil 30 und zwei damit schwenkbar verbundenen Seitenteilen 29, 29' gebildet. Vier Stellmittel 12 klappen die Seitenteile 29, 29' von einer vertikalen, schmalen Transportstellung in eine horizontale, wie dargestellte Arbeitsstellung. Aufgrund der Hebelwirkung der Stellmittel 12 jeweils um die Gelenke 31 und der von den Gelenken 31 seitlich beanstandeten Tiefenführungseinrichtungen 9 können auch die Stellkräfte der Stellmittel 12 mit Kraftmessbolzen oder Druckmesseinrichtungen bestimmt und damit der Auflagedruck der Tiefenführungseinrichtungen 9 auf den Boden 7 durch die Steuer- und Regeleinrichtung 10 bestimmt und geregelt werden. In gleicher Weise wie der vordere Rahmen 4 ist die hintere Rückverfestigungseinrichtung 6 klappbar für die Umstellung von Transport- in Arbeitsstellung ausgebildet. Die Rückverfestigungseinrichtung 6 besteht aus einem vorderen und einem hintern Paar von Walzen 32,33, wobei sich jede Walze über die halbe Maschinebreite erstreckt. Die Walzen 32,33 sind jeweils in einem Walzenrahmen 34 drehbar gelagert. Der Walzenrahmen 34 wiederum ist pendelnd jeweils an einen Schwenkarm 35 gelagert, welche über die Stellmittel 36 von Arbeits- in Transportposition schwenken können. Die Anordnung ist hier spiegelsymmetrisch ausgebildet. Die Stellmittel 36 und die Schwenkarme 35 sind an einem Mittelrahmen 37 gelagert, welcher dem Rahmen 21 zugeordnet ist. Auch eine einzelne Walzenreihe als seitliches Walzenpaar ist möglich, ebenso sind die verschiedensten Walzenformen auch als Reifenpacker denkbar, welche wiederum auch zum Straßentransport des Gerätes dienen können. Die Rückverfestigungseinrichtung 6 verdichtet den gelockerten Boden 7 ganzflächig. Aber auch eine streifenweise Rückverfestigung ist denkbar. Die Rückverfestigungseinrichtung 6 ist in mehreren Freiheitsgraden mehrfach beweglich ausgeführt. Entscheidend für die Funktion der Regelung ist jedoch nur die vertikale Verstellbarkeit oder die Höhenverstellung der Rückverfestigungseinrichtung 6 relativ zu den Bodenlockerungswerkzeugen 5, 5', 5".

## Patentansprüche

1. Gezogenes Bodenbearbeitungsgerät (1), insbesondere Zinkengrubber oder Kurzscheibenegge, mit einer Zugeinrichtung (2) zur Anhängung an einen Traktor (3) und einem mit der Zugeinrichtung (2) verbundenen Rahmen (4) und mit dem Rahmen (4) verbundenen, in einem vorderen Bereich angeordneten Bodenlockerungswerkzeugen (5), wobei den Bodenlockerungswerkzeugen (5) eine Rückverfestigungseinrichtung (6) zur Rückverfestigung des gelockerten Bodens (7) nachgelagert ist, wobei diese Rückverfestigungseinrichtung (6) mit zumindest einem Stellmittel (8) in der Höhe zu den Bodenlockerungswerkzeugen (5) durch Fremdkraft verstellbar ausgebildet ist, wobei benachbart zu dem Bereich der Bodenlockerungswerkzeuge (5) zumindest eine Tiefenführungseinrichtung (9) angeordnet ist,
**dadurch gekennzeichnet,**
**dass** die Stellmittel (8) zur Höhenverstellung der Rückverfestigungseinrichtung (6) den Auflagedruck der Tiefenführungseinrichtung (9) auf den Boden (7) regelnd mit einer Steuer- und Regeleinrichtung (10) ausgebildet sind, wobei die Steuer- und Regeleinrichtung (10) als Mobilcontroller ausgelegt ist, welcher die Werte von Messmitteln (11) und Signalgebern auswertet und verrechnet und erforderliche Stellsignale an Stellglieder oder die Stellmittel (8) weitergibt und zwar derart, dass bei steigendem oder sinkendem Auflagedruck der Tiefenführungseinrichtung (9) die Höheneinstellung der Rückverfestigungseinrichtung (6) über die Stellmittel (8) durch die Steuer- und Regeleinrichtung (10) nachjustiert wird.

2. Gezogenes Bodenbearbeitungsgerät nach Anspruch 1,
**dadurch gekennzeichnet,**
**dass** der minimale Abstand der Tiefenführungseinrichtung (9) zu einem der Bodenlockerungswerkzeuge (5) geringer ausgebildet ist als der minimale Abstand des Bereiches der Bodenlockerungswerkzeuge (5) zur Rückverfestigungseinrichtung (6).

3. Gezogenes Bodenbearbeitungsgerät nach Anspruch 1 oder 2,
**dadurch gekennzeichnet,**
**dass** der Auflagedruck der Tiefenführungseinrichtung (9) auf den Boden (7) als Regelgröße in Stufen oder stufenlos vorwählbar und einstellbar ist.

4. Gezogenes Bodenbearbeitungsgerät nach vorstehenden Ansprüchen,
**dadurch gekennzeichnet,**
**dass** der Auflagedruck der Tiefenführungseinrichtung (9) auf den Boden (7) mit Messmitteln (11) an der Tiefenführungseinrichtung (9) ermittelt wird.

5. Gezogenes Bodenbearbeitungsgerät nach vorstehenden Ansprüchen,
**dadurch gekennzeichnet,**
**dass** die Stellkräfte der Stellmittel (8) zur Höhenverstellung der Rückverfestigungseinrichtung (6) durch die Steuer- und Regeleinrichtung (10) erfasst werden und zur Regelung des Auflagedruckes der Tiefenführungseinrichtung (9) herangezogen werden.

6. Gezogenes Bodenbearbeitungsgerät nach vorstehenden Ansprüchen,
**dadurch gekennzeichnet,**
**dass** weitere Stellmittel (12) zum Einstellen des Rahmens (4) in eine Arbeitsstellung vorgesehen sind, deren Stellkräfte auf den Auflagedruck der Tiefenführungseinrichtung (9) schließen lassen und zu dessen Regelung durch die Steuer- und Regeleinrichtung (10) herangezogen werden.

7. Gezogenes Bodenbearbeitungsgerät nach vorstehenden Ansprüchen,
**dadurch gekennzeichnet,**
**dass** die Steuer- und Regeleinrichtung (10) als Dreipunktregler ausgebildet ist.

8. Gezogenes Bodenbearbeitungsgerät nach vorstehenden Ansprüchen,
**dadurch gekennzeichnet,**
**dass** die Steuer- und Regeleinrichtung (10) auf Steuer- oder Stellelemente des Traktors (3) einwirkend ausgebildet ist.

9. Gezogenes Bodenbearbeitungsgerät nach vorstehenden Ansprüchen,
**dadurch gekennzeichnet,**
**dass** die Tiefenführungseinrichtungen (9) seitlich zum Bereich der Bodenlockerungswerkzeuge (5) angeordnet sind.

10. Gezogenes Bodenbearbeitungsgerät nach vorstehenden Ansprüchen,
**dadurch gekennzeichnet,**
**dass** der Bereich der Bodenlockerungswerkzeuge (5) zumindest in den vorderen Reihen eine trapezförmige Aufteilung der Bodenlockerungswerkzeuge (5) bildet.

11. Gezogenes Bodenbearbeitungsgerät nach vorstehenden Ansprüchen,
**dadurch gekennzeichnet,**
**dass** der Zugeinrichtung (2) zumindest ein weiteres Stellmittel (13) zugeordnet ist, welches einen Teil des Gewichtes des Bodenbearbeitungsgerätes (1) auf den Traktor (3) übertragend ausgebildet ist.

12. Gezogenes Bodenbearbeitungsgerät nach vorstehenden Ansprüchen,
**dadurch gekennzeichnet,**
**dass** dem Bodenbearbeitungsgerät (1) ein vorzugsweise höhenverstellbares Transportfahrwerk (14) zugeordnet ist.

13. Gezogenes Bodenbearbeitungsgerät nach vorstehenden Ansprüchen,
**dadurch gekennzeichnet,**
**dass** das Transportfahrwerk (14) über Stellmittel (40) zusammen in einer Folgeschaltung mit den Stellmitteln (8) zur Höhenverstellung der Rückverfestigungseinrichtung (6) höhenverstellbar ausgebildet ist.

## Claims

1. Towed soil cultivation implement (1), in particular tined cultivator or compact disc harrow, with a draw bar (2) for coupling to a tractor (3) and a frame (4) connected to the draw bar (2) and soil tillage tools (5) connected in a front section with the frame (4), whereby a reconsolidation device (6) for the reconsolidation of the loosened ground (7) is downstream from the soil tillage tools (5), whereby this reconsolidation device (6) is designed to be adjustable in height to the soil tillage tools (5) through external power with at least one adjusting device (8), whereby at least one depth guide device (9) is arranged adjacent to the section of the soil tillage tools (5),
**characterised in that**
the adjusting devices (8) for adjusting the height of the reconsolidation device (6) are designed to control the contact pressure of the depth guide device (9) on the ground (7) with a controller (10), wherein the controller 10 is designed as a mobile controller which evaluates and calculates the values of measuring instruments 11 and signal transmitters and transmits required actuating signals to actuators or adjusting devices (8) and in such a way that, if the contact pressure of the depth guide device (9) increases or decreases, the height setting of the reconsolidation device (6) is readjusted by the controller (10) via adjusting devices (8).

2. Towed soil cultivation implement in accordance with claim 1,
**characterised in that**
the minimum distance between the depth guide device (9) and one of the soil tillage tools (5) is less than the minimum distance between the section of the soil tillage tools (5) and the reconsolidation device (6).

3. Towed soil cultivation implement in accordance with claim 1 or 2,
**characterised in that**
the contact pressure of the depth guide device (9) on the ground (7) can be selected and adjusted as a control variable in steps or continuously.

4. Towed soil cultivation implement in accordance with the above claims,
**characterised in that**
the contact pressure of the depth guide device (9) on the ground (7) is measured with measuring instruments (11) on the depth guide device (9).

5. Towed soil cultivation implement in accordance with the above claims,
**characterised in that**
the actuating forces of the adjusting devices (8) for adjusting the height of the reconsolidation device (6) are recorded by the controller (10) and used to regulate the contact pressure of the depth guide device (9).

6. Towed soil cultivation implement in accordance with the above claims,
**characterised in that**
additional adjusting devices (12) for setting the frame (4) in a working position are provided whose actuating forces are indicative of the contact pressure of the depth guide device (9) are included to regulate the contract pressure through the controller (10).

7. Towed soil cultivation implement in accordance with the above claims,
**characterised in that**
the controller (10) is designed as a three-point controller.

8. Towed soil cultivation implement in accordance with the above claims,
**characterised in that**
the controller (10) is designed to operate on the control or positioning elements of the tractor (3).

9. Towed soil cultivation implement in accordance with the above claims,
**characterised in that**
the depth guide devices (9) are arranged laterally to the section of the soil tillage tools (5).

10. Towed soil cultivation implement in accordance with the above claims,
**characterised in that**
the section of the soil tillage tools (5) forms a trapezoidal distribution of the soil tillage tools (5) at least in the front rows.

11. Towed soil cultivation implement in accordance with the above claims,
**characterised in that**
at least one additional adjusting device (13) is attached to the draw bar (2) that is designed to transfer part of the weight of the soil cultivation implement (1) to the tractor (3).

12. Towed soil cultivation implement in accordance with the above claims,
**characterised in that**
the soil cultivation implement (1) is provided preferably with a height-adjustable transport chassis (14).

13. Towed soil cultivation implement in accordance with the above claims,
**characterised in that**
the transport chassis (14) is designed height-adjustable via adjusting devices (40) for adjusting the height of the reconsolidation device (6) together in a control sequence with the adjusting devices (8).

## Revendications

1. Appareil de travail du sol (1) remorqué, en particulier cultivateur à dents ou déchaumeur à disques, comportant un dispositif de traction (2) destiné à être attelé à un tracteur (3) et un châssis (4) relié au dispositif de traction (2) et des outils d'ameublissement (5) reliés au châssis (4) et disposés dans une zone avant, dans laquelle un dispositif de rappuyage (6) pour reconsolider le sol ameubli (7) est disposé en aval des outils d'ameublissement (5), ce dispositif de rappuyage (6) étant réalisé de manière à être réglable en hauteur par rapport aux outils d'ameublissement (5) par une force externe avec au moins un moyen de réglage (8), au moins un dispositif de guidage en profondeur (9) étant disposé au voisinage de la zone des outils d'ameublissement (5),
**caractérisé en ce que**
les moyens de réglage (8) pour le réglage en hauteur du dispositif de rappuyage (6) sont conçus pour commander la pression d'appui du dispositif de guidage en profondeur (9) sur le sol (7) au moyen d'un dispositif de commande et de réglage (10), le dispositif de commande et de réglage (10) étant conçu comme un régulateur mobile, qui exploite et calcule les valeurs des moyens de mesure (11) et des transmetteurs de signaux et transmet les signaux d'actionnement nécessaires aux actionneurs ou aux moyens de réglage (8), de telle sorte que, lorsque la pression d'appui du dispositif de réglage de profondeur (9) augmente ou diminue, le réglage en hauteur du dispositif de rappuyage (6) par les moyens de réglage (8) est réajusté par le dispositif de commande et de réglage(10).

2. Appareil de travail du sol remorqué selon la revendication 1,
**caractérisé en ce que**
la distance minimale du dispositif de guidage en profondeur (9) par rapport à l'un des outils d'ameublissement (5) est inférieure à la distance minimale de la zone des outils d'ameublissement (5) par rapport au dispositif de rappuyage (6).

3. Appareil de travail du sol remorqué selon la revendication 1 ou 2,
**caractérisé en ce que**
la pression d'appui du dispositif de réglage de profondeur (9) sur le sol (7) peut être présélectionnée et réglée comme grandeur de réglage par paliers ou en continu.

4. Appareil de travail du sol remorqué selon aux revendications ci-dessus,
**caractérisé en ce que**
la pression d'appui du dispositif de guidage en profondeur (9) sur le sol (7) est déterminée par des moyens de mesure (11) sur le dispositif de guidage en profondeur (9).

5. Appareil de travail du sol remorqué selon aux revendications ci-dessus,
**caractérisé en ce que**
les forces d'actionnement des moyens de réglage (8) pour le réglage en hauteur du dispositif de rappuyage (6) sont détectées par le dispositif de commande et de réglage (10) et sont utilisées pour régler la pression d'appui du dispositif de réglage en profondeur (9).

6. Appareil de travail du sol remorqué selon aux revendications ci-dessus,
**caractérisé en ce que**
d'autres moyens de réglage (12) sont prévus pour engager le châssis (4) dans une position de travail, dont les forces de réglage sont indicatives de la pression d'appui du dispositif de guidage en profondeur (9) et sont utilisées par le dispositif de commande et de réglage (10) pour régler ce dernier.

7. Appareil de travail du sol remorqué selon aux revendications ci-dessus,
**caractérisé en ce que**
le dispositif de commande et de réglage (10) est conçu comme un régulateur à trois points.

8. Appareil de travail du sol remorqué selon aux revendications ci-dessus,
**caractérisé en ce que**
le dispositif de commande et de réglage (10) est conçu pour agir sur des éléments de commande ou de régulation du tracteur (3).

9. Appareil de travail du sol remorqué selon aux revendications ci-dessus,
**caractérisé en ce que**
les dispositifs de guidage de profondeur (9) sont disposés latéralement par rapport à la zone des outils d'ameublissement du sol (5).

10. Appareil de travail du sol remorqué selon aux revendications ci-dessus,
**caractérisé en ce que**
la zone des outils d'ameublissement du sol (5) au moins dans les premières rangées forme une division trapézoïdale des outils d'ameublissement du sol (5).

11. Appareil de travail du sol remorqué selon aux revendications ci-dessus,
**caractérisé en ce**
**qu'**au moins un autre moyen de réglage (13) destiné à transférer une partie du poids de l'appareil de travail du sol (1) sur le tracteur (3) est associé au dispositif de traction (2).

12. Appareil de travail du sol remorqué selon aux revendications ci-dessus,
**caractérisé en ce que**
l'appareil de travail du sol (1) reçoit un châssis de transport (14) de préférence réglable en hauteur.

13. Appareil de travail du sol remorqué selon aux revendications ci-dessus,
**caractérisé en ce que**
le châssis de transport (14) est conçu de manière à être réglable en hauteur par l'intermédiaire de moyens de réglage (40) dans un circuit séquentiel avec les moyens de réglage (8) pour le réglage en hauteur du dispositif de rappuyage (6).
